(19) Europäisches Patentamt

European Patent Office

Office européen des brevets

(11) **EP 1 635 358 A2**

(12) **EUROPEAN PATENT APPLICATION**

(43) Date of publication:
**15.03.2006 Bulletin 2006/11**

(51) Int Cl.:
***G21K 4/00*** (2006.01)

(21) Application number: **05255386.4**

(22) Date of filing: **02.09.2005**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **09.09.2004 JP 2004262363
14.09.2004 JP 2004266876**

(71) Applicant: **Konica Minolta Medical & Graphic, Inc.
Tokyo 163-0512 (JP)**

(72) Inventors:
• **Shoji, Takehiko,
c/o Konica Minolta M & G, Inc.
Hino-shi,
Tokyo 191-8511 (JP)**

• **Morikawa, Osamu,
c/o Konica Minolta M & G, Inc.
Hino-shi,
Tokyo 191-8511 (JP)**
• **Kudo, Shinji,
c/o Konica Minolta M & G, Inc.
Hino-shi,
Tokyo 191-8511 (JP)**

(74) Representative: **Rees, Alexander Ellison et al
Urquhart-Dykes & Lord LLP
30 Welbeck Street
London W1G 8ER (GB)**

(54) **Method for producing radiation image conversion panel**

(57) A method for manufacturing a radiation image conversion panel comprising the steps of: forming a stimulable phosphor layer on a substrate by a vapor deposition method to prepare a phosphor plate; heating the phosphor plate in an organic solvent gas; and sealing the phosphor plate with a moisture-proof protective film to prepare the radiation image conversion panel.

FIG. 1

EP 1 635 358 A2

### Description

This application is based on Japanese Patent Application No. 2004-262363 filed on September 9, 2004, and No. 2004-266876 filed on September 14, 2004 in Japanese Patent Office, the entire content of which is hereby incorporated by reference.

### FIELD OF THE INVENTION

The present invention relates to a method for producing a radiation image conversion panel to be used for forming a radiation image of a subject and to a radiation image conversion panel.

### BACKGROUND

A radiation image such as an X-ray image has been widely applied in the medical field for diagnosing a disease. Specifically, a radiation image obtained in combination of an intensifying paper and a film has been improved to achieve a high sensitivity and a high image quality during a long period of history and as the result, it is still now being used in the medical field of the world as an imaging system having a high reliability and a high cost performance. Recently, a computed radiography (CR) employing a stimulable phosphor plate has been commercialized and the improvements in sensitivity and image quality have been further continued.

In a radiation image conversion panel, a stimulable phosphor layer is irradiated with radiation passed through an object for accumulating the radiation energy corresponding to the radiation permeating density of each portion of the object. After that, the energy of the radiation accumulated in the stimulable phosphor is emitted as stimulated light by sequentially exciting the stimulable phosphor with irradiating visible light and infrared rays, and obtained signals of the emitted light are converted, for example, by photo-electric conversion into electric signals. The electric signals are reproduced as a visible image on a recording medium such as a silver halide photographic material or a display such as a CRT.

Since the radiation image conversion panel employing the stimulable phosphor releases the accumulated energy by scanning with the exciting light, the radiation image conversion panel can be repeatedly used by accumulating a new radiation image after the former scan. Namely, the radiation image conversion method is advantageous with respect to the resource conservation and the economical efficiency because the radiation image conversion panel is repeatedly employed contrary to that the a radiographic film is consumed for each shooting in the usual radiographic method.

It is known that the quality of the radiation image conversion system employing the radiation image conversion panel is largely influenced by the luminance of stimulable emission and the uniformity of the luminance in the panel, which rely upon the property of the stimulable phosphor.

An example of the production method of the radiation image conversion panel for increasing the luminance of stimulable emission from the radiation image conversion panel is disclosed in Patent Document 1. In the method described in Patent Document 1, a heat treatment is carried out in the presence of air or a rare gas on a phosphor plate prepared by forming a stimulable phosphor layer on a substrate by a conventional gas phase deposition.

When a stimulable phosphor layer formed on a substrate is subjected to a thermal treatment as described in Patent Document 1, the moisture in the crystal of the stimulable phosphor is removed, resulting in an increase in the amount of light emitted from the stimulable phosphor. However, the emitting amount of the light is not fully increased only by conducting a heat treatment and it may be possible that the clarity of the image is not fully enough or the luminance of the phosphor may be lowered by humidity.

Patent Document 1: Japanese Patent Publication Open to Public Inspection (hereafter referred to as JP-A) No. 2003-279696

### SUMMARY OF THE INVENTION

An object of the present invention is to provide a method for producing a radiation image conversion panel which is remarkably improved in luminance of emitting light and in sharpness of an image, and to provide the radiation image conversion panel.

One of the embodiments of the present invention for attaining the above object is a method for producing a radiation image conversion panel containing the steps of: forming a stimulable phosphor layer on a substrate by a vapor deposition method to prepare a phosphor plate; heating the phosphor plate in an organic solvent gas; and sealing the phosphor plate with a moisture-proof protective film to prepare the radiation image conversion panel.

**BRIEF DESCRIPTION OF THE DRAWINGS**

Fig. 1 shows a cross section of a radiation image conversion panel.
Figs. 2(a) - 2(d) show schematic drawings illustrating the sequential production method of a radiation image conversion panel.
Fig. 3 shows an enlarged cross section of a stimulable phosphor plate.

**DESCRIPTION OF THE PREFERRED EMBODIMENT**

The above object of the present invention is achieved by the following structures.

(1) A method for manufacturing a radiation image conversion panel containing the steps of:

forming a stimulable phosphor layer on a substrate by a vapor deposition method to prepare a phosphor plate; heating the phosphor plate in an organic solvent gas; and sealing the phosphor plate with a moisture-proof protective film to prepare the radiation image conversion panel.

(2) The method of Item (1) further containing the step of heating the phosphor plate in air or in an inert gas before heating the phosphor plate in the organic solvent gas.
(3) The method of Item (1) or Item (2) further containing the step of replacing the organic solvent gas with air or with an inert gas after heating the phosphor plate in the organic solvent gas.
(4) The method of any one of Items (1) to (3), wherein the organic solvent is a halogen-containing solvent.
(5) The method of Item (4), wherein the halogen-containing solvent is a fluorine-containing solvent.
(6) The method of Item (5), wherein the fluorine-containing solvent is a hydrofluoroether (HFE).
(7) The method of any one of Items (1) to (6), wherein the organic solvent is a nonflammable solvent having no firing point.
(8) The method of any one of Items (1), (2) and (4) to (7) further containing the step of adjusting an organic solvent gas pressure to an atmospheric pressure after heating the phosphor plate in the organic solvent gas.
(9) A radiation image conversion panel manufactured by a method containing the steps of:

forming a stimulable phosphor layer on a substrate by a vapor deposition method to prepare a phosphor plate; heating the phosphor plate in an organic solvent gas; and sealing the phosphor plate with a moisture-proof protective film to prepare the radiation image conversion panel.

(10) The radiation image conversion panel manufactured by the method of Item (9), the method further containing the step of heating the phosphor plate in air or in an inert gas before heating the phosphor plate in the organic solvent gas.
(11) The radiation image conversion panel manufactured by the method of Item (9) or Item (10) further containing the step of replacing the organic solvent gas with air or with an inert gas after heating the phosphor plate in the organic solvent gas.
(12) The radiation image conversion panel manufactured by the method of any one of Items (9) to (11), wherein the organic solvent is a halogen-containing solvent.
(13) The radiation image conversion panel manufactured by the method of Item (12), wherein the halogen-containing solvent is a fluorine-containing solvent.
(14) The radiation image conversion panel manufactured by the method of Item (13), wherein the fluorine-containing solvent is a hydrofluoroether (HFE).
(15) The radiation image conversion panel manufactured by the method of any one of Items (9) to (14), wherein the organic solvent is a nonflammable solvent having no firing point.
(16) The radiation image conversion panel manufactured by the method of any one of Items (9), (10) and (12) to (15) further containing the step of adjusting an organic solvent gas pressure to an atmospheric pressure after heating the phosphor plate in the organic solvent gas.

According to the invention described in Item (2), the radiation image conversion panel is remarkably improved in luminance of stimulable emission compared to a radiation image conversion panel heated only in an atmosphere of air or an inert gas, because the phosphor plate can be heated in the organic solvent gas atmosphere after removing moisture contained in the stimulable phosphor layer.

According to the present invention described in Item (3), the radiation image conversion panel is remarkably improved in luminance of stimulable emission compared to a radiation image conversion panel prepared without replacing the organic solvent gas with air or an inert gas.

According to the invention described in Item (4), the radiation image conversion panel excellent in luminance of stimulable emission can be obtained by heating the plate in a halogen-containing solvent gas.

According to the invention described in Item (5), the radiation image conversion panel excellent in luminance of stimulable emission can be obtained by heating the phosphor plate in a fluorine-containing solvent gas.

According to the invention described in Item (6), the radiation image conversion panel excellent in luminance of stimulable emission can be obtained by heating the phosphor plate in a HFE gas.

According to the invention described in Item (7), the phosphor plate can be heated at a high temperature and the solvent can be easily handled because the organic solvent is nonflammable since it has no flash point. Therefore, the production efficiency can be raised by shortening the heating time and the cost of production equipment such as a combustion preventing apparatus can be removed on the occasion of the use of the organic solvent.

The sharpness of the image and the luminance of stimulable emission can be raised as described in the following examples by the invention described in Items (1) through (8).

The best embodiment of the present invention is described below referring the drawings. The present invention is not limited to the examples shown in the drawings.

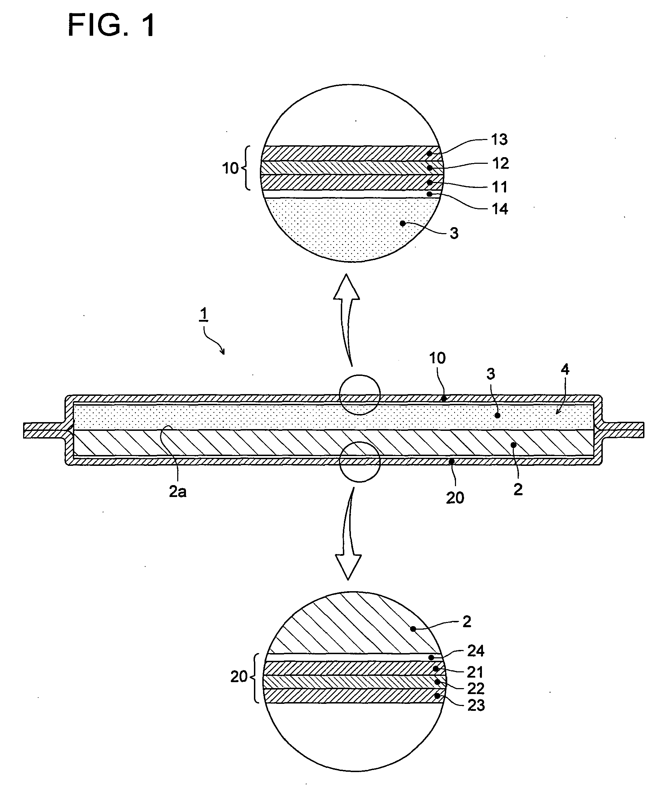

Fig. 1 shows a cross section of a radiation image conversion panel 1.

As is shown in Fig. 1, the radiation image conversion panel 1 has a phosphor plate 4 having a stimulable phosphor layer 3 provided on a substrate 2.

The substrate 2 has a rectangular shape. Example of a material used for the substrate 2 include: polymer, glass or metal, and preferably include: a plastic film such as a cellulose acetate film, a polyester film, a poly(ethylene terephthalate) film, a polyamide film, a triacetate film or a polycarbonate film; a plate of glass such as quartz, borosilicate glass or chemically strengthen glass; a metal sheet such as aluminum, iron, copper or chromium; and a metal sheet covered with an oxide layer of the metal.

The surface 2a (the upper surface shown in Fig. 1) of the substrate 2 may be a smooth surface or a matted surface. The surface 2a of the substrate 2 may have an under coat layer for improving the adhesion with the stimulable phosphor layer 3, or may have a light reflecting layer for preventing the incidence of exciting light passed through the substrate 2 into the stimulable phosphor layer 3.

The stimulable phosphor layer has a layer structure containing one or more layers, and the thickness of the layer is not less than 50 $\mu$m, and preferably from 300 to 500 $\mu$m. The stimulable phosphor layer 3 contains many columnar crystals 3a, 3a ··· of the stimulable phosphor arranged with a distance from each other, and the columnar crystals 3a are inclined making a designated angle with the normal line R of the surface 2a of the substrate 2.

The stimulable phosphor constituting the stimulable phosphor layer 3 is described in detail below.

Ones represented by Formula 1 can be employed as the stimulable phosphor.

<div align="center">

Formula 1

</div>

$$M^1X \cdot aM^2X'_2 \cdot bM^3X''_3 : eA$$

In the above, $M^1$ is an alkali metal selected from the group consisting of Li, Na, K, Rb and Cs, and preferably an alkali metal selected from the group of K, Rb and Cs.

$M^2$ is a di-valent metal selected from the group consisting of Be, Mg, Ca, Sr, Ba, Zn, Cd, Cu and Ni, and preferably a di-valent metal selected from the group of Be, Mg, Ca, Sr and Ba.

$M^3$ is a tri-valent metal selected from the group consisting of Sc, La, Ce, Pr, Nd, Pm, Sm, Eu, Gd, Tb, Dy, Ho, Er, Tm, Tb, Lu, Al, Ga and In, and preferably a tri-valent metal selected from the group of Y, La, Ce, Sm, Eu, Gd, Lu, Al, Ga and In.

X, X' and X'' are each a halogen selected from the group consisting of F, Cl, Br and I, and preferably a halogen selected from Br and I.

A is a metal selected from the group consisting of Eu, Tb, In, Ga, Cs, Ce, Tm, Dy, Pr, Ho, Nd, Yb, Er, Gd, Sm, Y, Tl, Na, Ag, Cu and Mg, and preferably a metal selected from the group of Eu, Cs, Sm, Tl and Na

a, b and e are each a value within the range of $0 \leq a < 0.5$, $5.0 \leq b < 0.5$ and $5.0 \leq e < 0.2$, respectively, and b is particularly preferably $0 \leq b \leq 0.5$.

Among the above, stimulable phosphors represented by the following Formula 2 is preferred.

Formula 2

CsX:A

In the above, X is Br or I, and A is Eu, In, Ga or Ce. Increasing in the X-ray conversion efficiency can be expected by the use of Eu as the activator.

The stimulable phosphor is produced by the following method employing, for example, the following raw materials of (a) through (d).

(a) One or more kinds of compound selected from the group consisting of LiF, LiCl, LiBr, LiI, NaF, NaCl, NaBr, NaI, KF, KCl, KBr, KI, RbF, RbCl, RbBr, RbI, CsF, CsCl, CsBr and CsI

(b) One or more kinds of compound selected from the group consisting of $BeF_2$, $BeCl_2$, $BeBr_2$, $BeI_2$, $MgF_2$, $MgCl_2$, $MgBr_2$, $MgI_2$, $CaF_2$, $CaCl_2$, $CaBr_2$, $CaI_2$, $SrF_2$, $SrCl_2$, $SrBr_2$, $SrI_2$, $BaF_2$, $BaCl_2$, $BaBr_2$, $BaI_2$, $ZnF_2$, $ZnCl_2$, $ZnBr_2$, $ZnI_2$, $CdF_2$, $CdCl_2$, $CdBr_2$, $CdI_2$, $CuF_2$, $CuCl_2$, $CuBr_2$, $CuI_2$, $NiF_2$, $NiCl_2$, $NiBr_2$ and $NiI_2$

(c) One or more kinds of compound selected fro the group consisting of $ScF_3$, $ScCl_3$, $ScBr_3$, $ScI_3$, $YF_3$, $YCl_3$, $YBr_3$, $YI_3$, $LaF_3$, $LaCl_3$, $LaBr_3$, $LaI_3$, $CeF_3$, $CeCl_3$, $CeBr_3$, $CeI_3$, $PrF_3$, $PrCl_3$, $PrBr_3$, $PrI_3$, $NdF_3$, $NdCl_3$, $NdBr_3$, $NdI_3$, $PmF_3$, $PmCl_3$, $PmBr_3$, $PmI_3$, $SmF_3$, $SmCl_3$, $SmBr_3$, $SmI_3$, $EuF_3$, $EuCl_3$, $EuBr_3$, $EuI_3$, $GdF_3$, $GdCl_3$, $GdBr_3$, $GdI_3$, $TbF_3$, $TbCl_3$, $TbBr_3$, $TbI_3$, $DyF_3$, $DyCl_3$, $DyBr_3$, $DyI_3$, $HoF_3$, $HoCl_3$, $HoBr_3$, $HoI_3$, $ErF_3$, $ErCl_3$, $ErBr_3$, $ErI_3$, $TmF_3$, $TmCl_3$, $TmBr_3$, $TmI_3$, $YbF_3$, $YbCl_3$, $YbBr_3$, $YbI_3$, $LuF_3$, $LuCl_3$, $LuBr_3$, $LuI_3$, $AlF_3$, $AlCl_3$, $AlBr_3$, $AlI_3$, $GaF_3$, $GaCl_3$, $GaBr_3$, $GaI_3$, $InF_3$, $InCl_3$, $InBr_3$ and $InI_3$

(d) One or more kinds of metal selected from the group consisting of Eu, Tb, In, Ga, Cs, Ce, Tm, Dy, Pr, Ho, Nd, Yb, Er, Gd, Lu, Sm, Y, Tl, Na, Ag, Cu and Mg

The above raw materials of (a) through (d) are weighed so as to satisfy the range of a, b and e in Formula 1 and mixed with water. The mixing may be satisfactorily performed by using a mortar, a ball mill or a mixer mill.

The pH C of the resultant mixture is controlled so as to be $0 < C < 7$ by adding a designated acid, and then the moisture is evaporated.

After that, the mixture of the raw materials is put into a heat resistant vessel such as a quartz crucible and an alumina crucible and baked in an electric furnace. The baking temperature is preferably from 500 to 1,000 °C. The baking time is preferably from 0.5 to 6 hours though the time is varied depending on the charged amount of the raw material mixture and the baking temperature.

A weak reduction atmosphere such as that of nitrogen gas atmosphere containing a small amount of hydrogen gas and that of carbon dioxide containing a small amount of carbon mono-oxide, a neutral atmosphere such as that of nitrogen gas and that of argon gas, and a weak oxidation atmosphere such as that containing a small amount of oxygen gas are preferable as the atmosphere for the baking.

The emitting light luminance can be further raised by that the material once baked under the foregoing conditions is taken out from the furnace and crashed and then re-baked under the same conditions. The baked material may be cooled in the weak reducing atmosphere, the neutral atmosphere or the weak oxidizing atmosphere the same as that on the occasion of the baking, though the baked material may be taken out from the furnace and cooled in air.

The emitting light luminance of the resulted stimulable phosphor can be further increased by rapidly cooling in the weak reducing atmosphere, the neutral atmosphere or the weak oxidizing atmosphere by moving the phosphor from the heating zone to a cooling zone in the furnace.

The stimulable phosphor layer 3 is constituted by the stimulable phosphor as above-mentioned so that the phosphor plate 4 is constituted by the stimulable phosphor layer 3 and the substrate 2.

In the radiation image conversion panel 1, a protective layer is provided for protecting the phosphor plate 4. The conversion panel 1 has two moisture-proof protective films 10 and 20, and the phosphor plate 4 is arranged between the first moisture-proof protective film 10 provided on the stimulable phosphor layer 3 and the second moisture-proof protective film 20 provided under the substrate 2.

The first moisture-proof protective film 10 has the area slightly larger than that of the phosphor plate 4 and the circumference of the film is extended out from the circumference of the phosphor plate 4 in a situation of that the film substantially not adhering with the stimulable phosphor layer 3 of the phosphor plate 4. The situation that "the first moisture-proof film 10 substantially not adhering with the stimulable phosphor layer 3" is a situation in which the moisture-proof protective film 10 is not optically unified with the stimulable phosphor layer 3, in concrete, a situation in which the adhering area of the first moisture-proof protective film 10 with the stimulable phosphor layer 3 is not more than 10% of the area of the surface of the stimulable phosphor layer 3 (the surface facing to the first moisture-proof protective film 10).

The second moisture-proof protective film 20 also has area slightly larger than that of the phosphor plate 4 and the edge thereof is extended out form the circumference of the phosphor plate 4.

In the radiation image conversion panel 1, the entire surround edge of the first and second moisture-proof protective films 10, 20 are contacted with each other by fusion so that the phosphor plate 4 is completely sealed by the first and second moisture-proof protective films 10, 20. The phosphor plate 4 is completely protected from permeation of water by sealing by the first and second moisture-proof protective films 10, 20.

As is shown in the upper enlarged drawing of Fig. 1, the first moisture-proof protective film 10 has a laminated structure containing a first layer 11, a second layer 12 and a third layer 13.

The first layer 11 is a layer facing to the stimulable phosphor layer 3 of the phosphor plate 4 through an air layer 14 and contains a thermally fusible resin. For the thermally fusible resin, for example, ethylene-vinyl acetate copolymer (EVA), casting polypropylene (CPP) and polyethylene (PE) are employable.

The second layer 12 is a layer containing a metal oxide such as alumina and silica, which is deposited under the third layer 13 by a vapor deposition method. The second layer 12 may be omitted although the second layer 12 raises the anti-moisture ability of the first moisture-proof film 11.

The third layer 13 is laminated on the second layer 12, which contains poly(ethylene terephthalate) (PET).

Thus prepared first moisture-proof protective film 10 having the second layer 12 containing a metal oxide is excellent in processing and transparency. Also, properties of anti-moisture and anti-oxygen permeation of the first moisture-proof protective film 10 tend to be less influenced by temperature and humidity. Accordingly, the first moisture-proof protective film 10 is suitable for the medical use radiation image conversion panel 1 utilizing the stimulable phosphor which requires a stable image quality not influenced by environmental conditions.

On the third layer 13, the same layer as the first layer 11, the same layer as the second layer 12 and the same layer; or one or more layers containing a resin different from that of the first layer 11 and the third layer 13 may be laminated.

When one or more layer which is the same as the second layer 12 containing a metal oxide such as alumina or silica is laminate on the third layer 13, the protective film 10 exhibits a moisture-proof property corresponding to the number of the laminated layer which is the same as the second layer 12. Any known methods are applicable for laminating the second layer 12 or a layer the same as the second layer 12. Of these, a dry lamination method is preferrable from the viewpoint of the production efficiency.

As is shown in the enlarged drawing displayed at the lower portion of Fig. 1, the second moisture-proof protective film 20 has a laminated structure containing a first layer 21, a second layer 22 and a third layer 23.

The first layer 21 is faced to the substrate 2 of the phosphor plate 4 through an air layer 24. The first layer 21 contains a resin which is the same as that of the first layer 11 of the first moisture-proof protective film 10, and is fused with the first layer 11 of the moisture-proof protective layer 10 at the circumference portion thereof.

The second layer 22 is an aluminum layer laminated on the first layer 21 as shown in Fig.1. The second layer 22 raises the anti-moisture ability of the second moisture-proof protective film 20. The second layer 22 may be omitted.

The third layer 23 is laminated on the second layer 22 as shown in Fig. 1, which contains a resin such as PET.

On the third layer 23, the same layer as the first layer 21, the same layer as the second layer 22 and the same layer as the third layer 23; or one or more layers containing a resin different from that of the first layer 21 and the third layer 23 may be laminated.

The production method of the radiation image conversion panel 1 according to the present invention is described below.

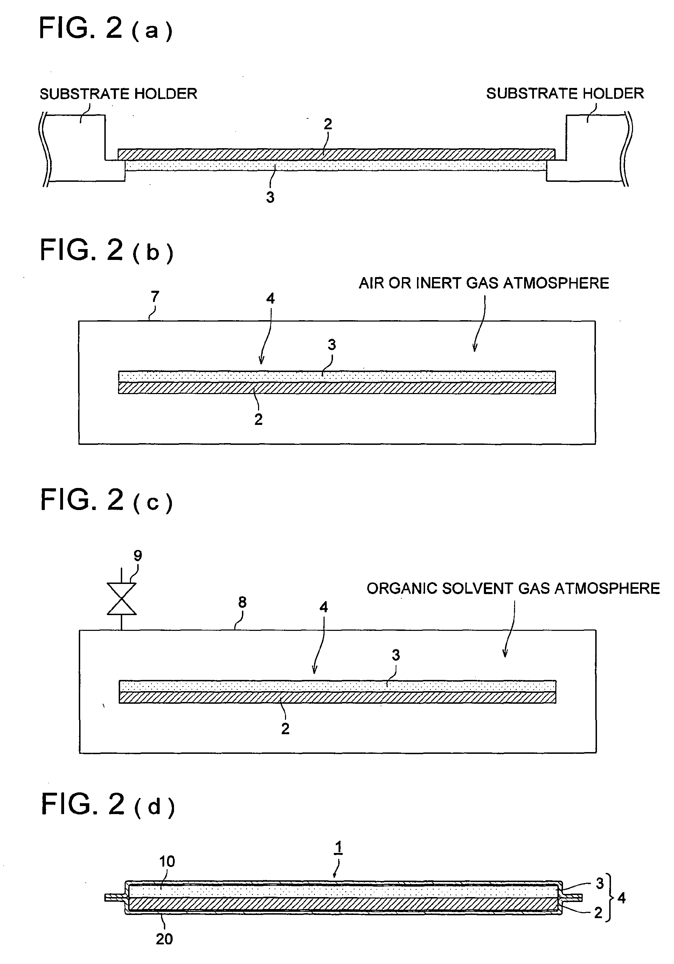

Fig. 2 is a scheme displaying the production steps of the radiation image conversion panel 1.

Firstly, a designated substrate 2 is prepared and a stimulable phosphor layer 3 is formed on the substrate 2 by a known method such as a vapor deposition method or a coating method.

For example, the formation of the stimulable phosphor layer 3 by an evaporation method among plural kinds of vapor deposition methods is described below. The substrate 2 is fixed on a substrate holder in an evaporation apparatus, and then the interior of the apparatus is evacuated to vacuum. After that, the stimulable phosphor as the vapor source is heated and evaporated by means of a resistant heating method or an electron beam method so as to grow the stimulable phosphor of a desired thickness on the surface 2a of the substrate 2. Thus the stimulable phosphor layer 3 is formed on the substrate 2.

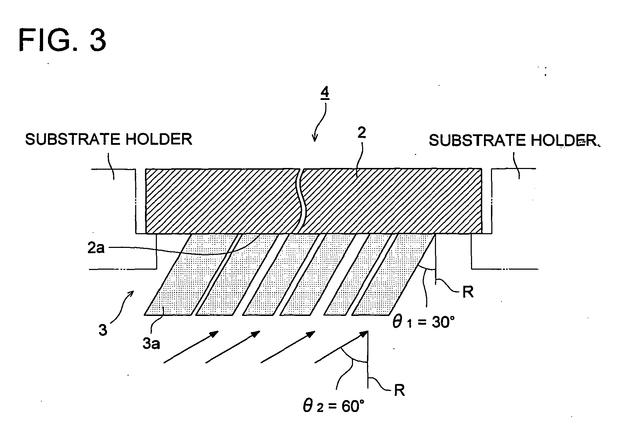

Provided that the incidental angle of the vapor stream of the stimulable phosphor with the normal line R of the surface 2a of the substrate 2 is $\theta 2$ and the inclination angle of the columnar crystal 3a is $\theta 1$, as is shown in Fig. 3, the inclination angle $\theta 1$ is empirically a half of the incidental angle $\theta 2$. Consequently, columnar crystals 3a, 3a ⋯ having the inclination angle $\theta 1$ is formed corresponding to the incidental angle $\theta 2$. Namely, many columnar crystals 3a, 3a ⋯ having an inclination angel of 30° can be formed by supplying the vapor stream of the stimulable at an incidental angle of 60°.

For supplying the vapor of the stimulable phosphor at a designated angle, applicable are, for example, the following methods: (i) a method in which the substrate is set at an inclined angle with the vapor source, and (ii) a method in which the substrate 2 and the vapor source are set in parallel with each other and only the inclined component of the vapor stream is taken out from the vapor source by using a slit.

After the formation of the stimulable phosphor layer 3 on the substrate 2, the substrate 2 carrying the stimulable phosphor layer 3 (the phosphor plate 4) is set in a thermostatic container 8 having a valve 9 as is shown in Fig 2(c), and then the phosphor plate 4 (the stimulable phosphor layer 3) is heated in an atmosphere of the organic solvent.

In concrete, the phosphor plate is set in the thermostatic container 8 and the interior of the thermostatic container 8 is made vacuum of about 0.1 Pa while the vulve is closed, and then the interior pressure is restored to the ordinary atmosphere pressure by introducing the organic solvent, and the system is heated at a temperature of not less than 100 °C, and preferably a temperature of from 100 °C to 160 °C.

The organic solvent to be employed in the above will be described below.

The organic solvent is preferably a halogen-containing solvent. The halogen-containing solvent is a solvent containing a hydrocarbon compound in which at least one hydrogen atom is replaced with a halogen atom such as F, Cl, Br or I. The halogen-containing solvent may be a compound in which the atoms are bonded only saturated bonds, a compound containing a unsaturated bond, a cyclic compound, a chain compound, or a compound in which an atom or a group is replaced with a hydroxyl group, an ether group, a carbonyl group or a carboxyl group.

For the halogen-containing solvent, an nonflammable solvent having no firing point is preferably applied because (1) the solvent is used in the heating process (from the viewpoint of properties such as having no firing point are required by the fire laws relating to the flammability and the explosivity). In such the case, the heating temperature can be optionally decided without consideration of the kind of the halogen-containing solvent to be employed, and the heating is preferably performed at a temperature lower than the flash point.

Flon alternation compounds which are recently attracting attention are considered to be attractive candidates as organic solvents to be used in the present invention from the viewpoint of (2) the environmental suitability, (3) biological harmfulness as well as foregoing (1). Among them, HFE (hydrofluoroether) is suitably employed as a halogen-containing solvent, which is one of the newest flon alternation compounds superior in the above (2) and (3).

The HFE contains carbon atoms, fluorine atoms, hydrogen atoms and at least one ether oxygen atom, and may contain one or more hetero atoms such as a sulfur atom or a tri-valent nitrogen atom combined in the main carbon chain. The HEF may be a straight-chain compound, a branched-chain compound, a cyclic compound or a compound constituted by a combination of the above structures, for example, an aliphatic alkyl cyclic compound. However, the HFE preferably contains no unsaturated bond.

A compound represented by the following Formula 3 can be employed as a concrete example of the HEF.

$$\text{Formula 3}$$

$$(R^4-O)_a-R^5$$

In the above Formula 3, "a" is an integer of from 1 to 3, and $R^4$ and $R^5$ each is an alkyl group or an aryl group which may be the same or different. At least one of $R^4$ and $R^5$ contains a fluorine atom and a hydrogen atom, one or both of $R^4$ and $R^5$ may contains a hetero atom in the chain thereof, and the total number of fluorine atoms in the HFE is preferably larger than the total number of hydrogen atoms in the HFE. $R^4$ and $R^5$ each may have a straight-chain, a branched chain or a cyclic group, and may contain one or more unsaturated carbon-carbon bonds. However, preferably, both of $R^4$ and $R^5$ only contain saturated bonds of atoms.

Examples of HFE having such the properties include Novec© HFE-7100, HFE-7100DL and HFE-7200, manufactured by Sumitomo 3M Co., Ltd., and HFE-S7 (commercial name), manufactured by Daikin Kogyo Co., Ltd. These HEFs available on the market can be suitably employed as the halogen-containing solvent employable in the heating steps.

After the heating treatment, the valve 9 is opened to remove the organic solvent gas in the thermostatic container 8 so that the pressure of the organic solvent atmosphere is adjusted to that of the open air atmosphere. Thereafter, the phosphor plate is cooled for about 1 hour by standing in the thermostatic container 8. The cooling by standing of the phosphor plate 4 after the heating treatment and removal of the organic solvent is performed for preventing the liquefying the organic solvent adhering to or closed in each of the columnar crystals 3a.

The phosphor plate 4 is take out from the thermostatic container 8 after the cooling by standing, and sandwiched between the first and second moisture-proof protective films 10, 20, and then the circumference of the moisture-proof protective films are fused by heating by an impulse sealer. Thus the phosphor plate 4 is sealed by the first and second moisture-proof protective films 10, 20 and the production of the radiation image conversion panel 1 is completed.

Next, a production process is described, in which the heating treatment is carried out in air or in an inert gas atmosphere before heating in an organic solvent atmosphere.

After preparation of the stimulable phosphor layer 3 on the substrate 2, the stimulable phosphor layer 3 is subjected to the following two steps of heat treatments. The heating treatment is performed in a thermostatic chamber 7 (Fig. 2(b)) or the thermostatic container 8 (Fig. 2(c)) having a volume of about 6 litter installed in the thermostatic chamber 7. The thermostatic chamber 7 and the thermostatic container 8 is constituted so that the substrate on which the stimulable phosphor formed can be completely contained therein and pipes are connected to the thermostatic chamber and the thermostatic container so that the designated gas or liquid can be come in or come out. The valve 9 capable of opening and closing is attached to the thermostatic container 8, and the interior of the thermostatic container 8 and that of the thermostatic chamber 7 are connected by opening the valve 9 so that the gas contained in the thermostatic container 8 is exchanged by the gas in the thermostatic chamber 7. The valve 9 may be used both for bringing in or for bringing out the designated gas and liquid to or from the thermostatic container 8. In such the case, it is preferable that a plural of valve 9 is provided.

At first, the substrate 2 on which the stimulable phosphor layer 3 is formed is put in the thermostatic chamber 7 and air in the chamber is once exhausted for making vacuum of about 0.1 Pa, and then dried air or an inert gas such as Ar or Ne is introduced into the chamber so that the pressure is made to the open air atmosphere pressure. Then the system is heated at a temperature of from 50 °C to 300 °c, and preferably from 100 °C to 140 °C, for removing moisture from the columnar crystals 3a (hereafter this step of teat treatment is referred to as "a first heating treatment"). After that, the system is naturally cooled for about 1 hour, and the next heating treatment (hereafter this step of teat treatment is referred to as "a second heating treatment") is applied when the temperature in the thermostatic chamber becomes at a temperature of 50 °C or less. The natural cooling of the phosphor plate 4 is performed to prevent crashing of the phosphor plate caused by difference of the thermal expansion late.

The second heating treatment is carried out in organic solvent gas atmosphere as follows. The stimulable phosphor layer 3 obtained by the first heating treatment is put into the thermostatic container 8, and air in the thermostatic container is once exhausted for making vacuum of about 0.1 Pa, and then the organic solvent is introduced. Thereafter the system is heated at a temperature of not less than 60 °C, and preferably from 100 °C to 160 °C, for evaporating the organic solvent so that the pressure is made to the same as that of open air atmosphere.

After the above heating treatment, the valve 9 is opened for exchange the organic solvent gas in the thermostatic container 8 by air or the inert gas. The system is naturally cooled similar to that in the first heating treatment. The natural cooling of the phosphor plate 4 after the second heating treatmnet and the gas exchanging is performed for preventing the liquefying the organic solvent adhering to or closed in each of the columnar crystals 3a.

A protective layer is provided on the side of the stimulable phosphor layer opposite to the substrate 2, according to necessity when the temperature in the thermostatic container 8 and the thermostatic chamber 7 becomes 50 °C or less (cf. Fig. 2(d)). The protective layer may be formed by directly coating a coating liquid for the protective layer on the surface of the stimulable phosphor layer or by sticking a separately prepared protective layer onto the stimulable phosphor layer.

Usual materials for protective layer such as cellulose acetate, cellulose nitrate, poly(methyl methacrylate), poly (vinyl butyral), poly(vinyl formal), polycarbonate, polyester, poly(ethylene terephthalate), polyethylene, poly(vinylidene chloride), nylon, polytetrafluoroethylene, polytrifluorochloroethylen, tetrafluoroethylenehexafluoroethylen copolymer, vinylidene chloride-vinyl chloride copolymer and vinylidene chloride-acrylonitrile copolymer are employable for the protective layer. A transparent glass plate can be also employed for the protective layer.

The protective layer may be formed by laminating an inorganic substance such as SiC, $SiO_2$ SiN and $Al_2O_3$ by a vapor deposition method or a spattering method.

The thickness of the protective layer is preferably from 0.1 to 2,000 $\mu$m.

The radiation image conversion panel produced by the above-described method is considerably superior in the luminance and the sharpness, and the degradation in the luminance caused by humidity can be prevented compared with the usual phosphor plate which is constituted by forming the stimulable phosphor layer on the substrate and subjected only to the first heating treatment performed in the atmosphere of air or the inert gas.

## EXAMPLES

The present invention is described referring examples. The present invention is not limited to the examples.

Example 1

Plural samples of the radiation image conversion panel were prepared and the luminance and the sharpness of the samples were evaluated.

(1) Preparation of Samples 1-1 through 1-7

Seven square-shaped aluminum plates of 20 cm x 20 cm each having a thickness of 500 $\mu$m were prepared for the substrate, and a light reflection layer was formed on one side of each of the plates. The light reflection was formed by depositing titanium oxide, manufactured by Furuuchi Kagaku Co., Ltd., and zirconium oxide, manufactured by Furuuchi Kagaku Co., Ltd., on the substrate by a known vapor deposition apparatus.

Next, a stimulable phosphor composed of CsBr:Eu was deposited on the light reflection layer of each of the substrates to form a stimulable phosphor layer. In concrete, a substrate was fixed in a vacuum chamber of the vapor deposition apparatus so that the surface of each of the substrate on which the light reflection layer was formed was faced to the vapor source and the temperature in the vacuum chamber was raised to 240 °C. Then, nitrogen gas was introduced into the vacuum chamber so that the pressure inside the vacuum chamber increased to 0.1 Pa. The distance between the vapor source and the substrate was 60 cm. An aluminum slit was arranged between the vapor source and the substrate so that the incident angle of the vapor of the stimulable phosphor with the normal line of the light reflection surface of the substrate was made to 30°. Thereafter, the vapor deposition was performed while the substrate was moved in the surface direction to form a layer of columnar crystal of the stimulable phosphor having a thickness of 500 μm on the light reflection layer of each of the substrates. Thus seven phosphor plates were prepared.

Each of the above-obtained seven phosphor plates was put into a thermostatic container and heated at 100 °C for 1 hour in a different gas atmosphere as shown in Table 1. The organic solvent gases A through E in the column of "Gas atmosphere" in Table 1 correspond to the following gas atmospheres, respectively.

A: Novec HFE-7100 ($C_4F_9OCH_3$), Sumitomo 3M Co., Ltd.
B: Asahiclean AK-225 ($CF_3CF_2CHCl_2/CCLF_2CF_2CHCLF$),
Asahi glass Co., Ltd.
C: Zeorola H (cyclic $C_5H_3F_7$), Zeon Corporation.
D: eClean 21F ($C_4H_5F_5$), Kaneko Kagaku Co., Ltd.
E: SC52S (HCBr type), Dipsol Chemicals Co., Ltd.

On the stimulable phosphor layer of each of the seven phosphor plates, a first moisture-proof protective film was provided so that the CPP layer of the first protective film faced to the stimulable phosphor layer, and, on the substrate of each of the phosphor plates, a second moisture-proof protective film was provided so that the CPP layer of the second protective film faced to the substrate. Then, the two moisture-proof protective films were piled each other. After that, while the space enclosed by the first and second moisture-proof protective films was being evacuated, the first and second moisture-proof protective films were fused each other at the circumference portion thereof by an impulse sealer to seal the phosphor plate by the first and second moisture-proof protective films. Thus seven radiation image conversion panels were prepared.

On the occasion of sealing of the circumference of the first and second moisture-proof protective films, the impulse sealer having a heater of 3 mm was used and the sealing was performed so that the distance from the fused portion of the first and second moisture-proof protective films to the circumference was 3 mm. Thus obtained radiation image conversion panels were referred to as Samples 1-1 through 1-7 corresponding to the gas atmospheres during the heat treatments sown in Table 1.

(2) Evaluation of Samples 1-1 through 1-7

The emitting light luminance and the sharpness of Samples 1-1 through 1-7 were evaluated.

(2-1) Evaluation of emitting light luminance

The emitting light luminance was evaluated by the following method.

Each of Samples 1-1 through 1-7 was irradiated with X-rays of a tube voltage of 80 kVp from the backside (the surface on which no stimulable phosphor layer was formed) of the sample. After that, the surface (the surface on which the stimulable phosphor layer was formed) of each of the Samples 1-1 through 1-7 was scanned by a semi-conductor laser for exciting the stimulable phosphor, and the light amount (intensity) of the light emitted from the stimulable phosphor layer was measured by a light receiving device (a photomultiplier having spectral sensitivity of S-5), and the measured value was defined as the "sensitivity (emitting light luminance)". Results are listed in table 1. In Table 1, the values of Samples 1-2 through 1-7 are elative values when the sensitivity of Sample 1-1 is set at 100.

(2-2) Evaluation of Image sharpness

The sharpness was evaluated by the following method.

Each of Samples 1-1 through 1-7 was irradiated with X-rays of a tube voltage of 80 kVp from the backside (the surface on which no stimulable phosphor layer was formed) through a lead MFT chart. After that, the surface (the surface on which the stimulable phosphor layer was formed) of the each of Samples 1-1 through 1-7 was scanned by a He-Ne semiconductor laser for exciting the stimulable phosphor. The light emitted from the stimulable phosphor is received by a light receiving device (a photomultiplier having spectral sensitivity of S-5) and converted to electric signals. The electric signals were subjected to analog/digital conversion and recorded by a hard disc. Then the signals recorded on the hard disc were analyzed by a computer to determine the modulation transfer function (MTF) of the X-ray image recorded on the hard disc. The measured results represented by MTF (%) at a space frequency of 1 cycle/mm are listed in the following Table 1. In the results, a higher MFT value corresponds to a higher sharpness.

Table 1

| Sample No. | Gas Atmosphere | Sensitivity (Luminance) | Sharpness (MTF value (%)) |
|---|---|---|---|
| 1-1 | Organic solvent gas atmosphere (A) | 100 | 79 |
| 1-2 | Organic solvent gas atmosphere (B) | 87 | 75 |
| 1-3 | Organic solvent gas atmosphere (C) | 83 | 75 |
| 1-4 | Organic solvent gas atmosphere (D) | 73 | 73 |
| 1-5 | Organic solvent gas atmosphere (E) | 70 | 72 |
| 1-6 | Air | 50 | 70 |
| 1-7 | Nitrogen | 60 | 70 |

As is shown in Table 1, satisfactory evaluation results could not be obtained by Samples 1-6 and 1-7 each subjected to heating treatment in air and nitrogen atmosphere, respectively. In contrast, the emitting light luminance was raised and the sharpness was superior in Samples 1-1 through 1-5 subjected to the heat treatment in the organic solvent gas atmosphere. Consequently, it was understood that the heating treatment in the organic solvent atmosphere was advantageous for improving the emitting light luminance and the sharpness.

Example 2

(1) Preparation of Samples

Thirteen square-shaped aluminum plates of 20 cm x 20 cm each having a thickness of 500 $\mu$m were prepares for the substrate, and a light reflection layer was formed on one side of each of the plates. The light reflection was formed by depositing titanium oxide, manufactured by Furuuchi Kagaku Co., Ltd., and zirconium oxide, manufactured by Furuuchi Kagaku Co., Ltd., on the substrate by a known vapor deposition apparatus.

Next, a stimulable phosphor composed of CsBr:Eu was deposited on the light reflection layer of each of the substrates to form a stimulable phosphor layer. In concrete, the substrates was fixed in a vacuum chamber of the vapor deposition apparatus so the surface of each of the substrate on which the light reflection layer was formed was faced to the vapor source and the temperature in the vacuum chamber was raised by 240 °C. In such the situation, nitrogen gas was introduced into the vacuum chamber so that the vacuum degree in the vacuum chamber was made to 0.1 Pa. The distance between the vapor source and the substrate was 60 cm. An aluminum slit was arranged between the vapor source and the substrate so that the incident angle of the vapor of the stimulable phosphor with the normal line of the light reflection surface of the substrate was 30°. Thereafter, the vapor deposition was performed while the substrate was moved in the surface direction to form a layer of columnar crystal of the stimulable phosphor having a thickness of 300 $\mu$m on the light reflection layer of each of the substrates. Thus thirteen phosphor plates were prepared.

On the other hand, a first moisture-proof protective film constituted by laminating a PET layer having a thickness of 24 $\mu$m with a CPP layer having a thickness of 30 $\mu$m and a second moisture-proof protective film constituted by laminating a PET layer having a thickness of 100 $\mu$m with a CPP layer having a thickness of 30 $\mu$m were prepared.

(2-1) Preparation of Sample 2-1

The stimulable phosphor layer of one of the thirteen phosphor plates was faced to the CPP layer of a first moisture-proof protective film and the substrate of the phosphor plate was faced to the CPP layer a second moisture-proof protective film and they are piled in such the situation. After that, the first and second moisture-proof protective layers were fused at the circumference portion thereof by an impulse sealer while the pressure in the space enclosed by the first and second moisture-proof protective films was reduced to seal the phosphor plate into the first and second moisture-proof protective films. Thus seven radiation image conversion panels were prepared.

On the occasion of sealing of the circumference of the first and second moisture-proof protective films, the impulse sealer having a heater of 3 mm was used and the sealing was performed so that the distance from the fused portion of the first and second moisture-proof protective films to the circumference was 3 mm.

The radiation image conversion panel prepared by the above producing method was referred to as Sample 2-1. Details of the producing process of Sample 2-1 were listed in Table 2.

Preparation of Samples 2-2 through 2-4

Three phosphor plates were picked up from the remaining twelve phosphor plates, and each of them was set in a thermostatic container in which a small container having a valve and heated at 100 °C for 1 hour (the first heat treating process) in the atmosphere different from each other as shown in Table 1, and then naturally cooled.

After that, each of the cooled phosphor plate was sealed by the moisture-proof protective films in the same manner as in Sample 2-1. Thus obtained samples were each referred to as Samples 2-2 to 2-4, respectively. Details of the production process are shown in Table 2.

(2-3) Preparation of Samples 2-5 through 2-13

Remaining nine phosphor plates were each subjected to the first heating treatment process and the naturally cooling under the conditions listed in Table 2 in the similar manner to that in Sample 2-2. The cooled samples were each moved into a small container and heated under the different conditions as shown in Table 2 (the second heat treatment process). After that, the gas was removed by opening the valve for 15 minutes while maintaining the temperature at 100 °C. The phosphor plates after the removal of the gas were each naturally cooled and sealed by the moisture-proof films in the same manner as in Sample 2-2. Thus obtained samples were referred to as Samples 2-5 through 2-13, respectively. Details of the production process of Samples 2-5 through 2-13 were shown in Table 2.

In Table 2, "Organic solvent" shows the kind of the organic solvent employed in the second heating treatment process, and the solvents are the following compounds F through J.

F: Novec HFE-7100 ($C_4F_9OCH_3$), Sumitomo 3M Co., Ltd.
G: Zeorola H (cyclic $C_5H_3F_7$), Zeon Corporation.
H: SC52S (HCBr type), Dipsol Chemicals Co., Ltd.
J: Guaranteed reagent class carbon tetrachloride ($CCl_4$) Wako Pure Chemical Industries, Ltd.

## Table 2

| Sample No. | First heat treatment process | | | Second heat treatment process | | | Gas removal | | Lumi-nance | Sharp-ness (%) | Lumi-nance degra-dation by humidity | Remarks |
|---|---|---|---|---|---|---|---|---|---|---|---|---|
| | Treat-ment | Atmo-sphere | Temper-ature (°C) | Treat-ment | Organic solvent | Temper-ature (°C) | Removal | Temper-ature (°C) | | | | |
| 1-1 | Without | – | – | Without | – | – | Without | – | 1.0 | 70 | 80 | Comparative example 1 |
| 1-2 | With | Air | 100 | Without | – | – | Without | – | 1.1 | 70 | 80 | Comparative example 2 |
| 1-3 | With | Nitrogen | 100 | Without | – | – | Without | – | 1.1 | 70 | 75 | Comparative example 3 |
| 1-4 | With | Argon | 100 | Without | – | – | Without | – | 1.1 | 70 | 76 | Comparative example 4 |
| 1-5 | With | Air | 100 | With | F | 140 | With | 100 | 1.9 | 83 | 100 | Inventive example 1 |
| 1-6 | With | Nitrogen | 100 | With | F | 140 | With | 100 | 2.2 | 86 | 100 | Inventive example 2 |
| 1-7 | With | Argon | 100 | With | F | 140 | With | 100 | 2.1 | 85 | 100 | Inventive example 3 |
| 1-8 | With | Nitrogen | 100 | With | G | 140 | With | 100 | 1.9 | 80 | 98 | Inventive example 4 |
| 1-9 | With | Nitrogen | 100 | With | H | 140 | With | 100 | 1.4 | 75 | 90 | Inventive example 5 |
| 1-10 | With | Nitrogen | 100 | With | J | 140 | With | 100 | 1.2 | 73 | 89 | Inventive example 6 |
| 1-11 | With | Nitrogen | 100 | With | F | 80 | With | 100 | 1.2 | 80 | 90 | Inventive example 7 |
| 1-12 | With | Nitrogen | 100 | With | F | 100 | With | 100 | 1.5 | 82 | 95 | Inventive example 8 |
| 1-13 | With | Nitrogen | 100 | With | F | 120 | With | 100 | 1.9 | 84 | 100 | Inventive example 9 |

(2) Evaluation of radiation image conversion panel

The samples prepared as above were subjected to evaluation on the emitting light luminance, sharpness and luminance degradation caused by moisture.

(2-4) Evaluation of emitting light luminance

The emitting light luminance was evaluated by the following method.

Each of the samples was irradiated by X-rays by a tube voltage of 80 kVp from the backside (the surface on which no stimulable phosphor layer was formed) of the samples. After that, the surface (the surface on which the stimulable phosphor layer was formed) of each of the samples was scanned by a semi-conductor laser for exciting the stimulable phosphor, and the light amount (intensity) of the light emitted from the stimulable phosphor layer was measured by a light receiving device (a photomultiplier having spectral sensitivity of S-5), and the measured value was defined as the "sensitivity (emitting light luminance)". Results are listed in table 2. In Table 2, the values of Samples 2-2 through 2-13 are elative values when the sensitivity of Sample 2-1 is set at 1.0.

(2-2) Evaluation of sharpness

The sharpness was evaluated by the following method.

Each of Samples was irradiated by X-rays by a tube voltage of 80 kVp through a lead MFT chart from the backside (the surface on which no stimulable phosphor layer was formed). After that, the surface (the surface on which the stimulable phosphor layer was formed) of the each of the samples was scanned by a He-Ne semiconductor laser for exciting the stimulable phosphor. The light emitted from the stimulable phosphor is received by a light receiving device (a photomultiplier having spectral sensitivity of S-5) and converted to electric signals. The electric signals were subjected to analog/digital conversion and recorded by a hard disc. Then the signals recorded on the hard disc were analyzed by a computer to determine the modulation transfer function (MTF) of the X-ray image recorded on the hard disc. The measured results represented by MTF (%) at a spatial frequency of 1 cycle/mm are listed in the following Table 2. In the results, a higher MFT value corresponds to higher sharpness.

(2-6) Luminance degradation caused by moisture

The degradation in the luminance caused by moisture is evaluated by the following method.

The samples were stood for 50 days in a high temperature condition of a temperature of 40 °C and a humidity of 90% and then the emitting light luminance of the samples were measured in the same manner as that in the evaluation item (2-4). In Table 2, the values representing the sensitivity of the samples are relative values when the luminance of each sample before the moisture degradation treatment is set at 100.

It is confirmed that the luminance is raised by the heat treatment by the results that Samples 2-2 through 2-4 treated by the heating show the luminance of 1.1 compared with Sample 2-1 without the heating treatment. However, any effect on the sharpness is not obtained. Moreover, the heating treatment causes the luminance degradation by humidity; the luminance of Samples 2-2 through 2-4 each subjected to only the first heating treatment process are lowered from 20 to 25% by the moisture degradation treatment compared with Sample 2-1 without heating treatment.

It is understood from the results of Sample 2-2 through 2-4 that the effects of the atmosphere in the heating process are not different even when it is air or the inert gas.

Samples 2-5 through 2-13 each subjected to the second heating treatment additionally to the first heating treatment display the luminance of 1.2 to 2.2 which is higher than the luminance of Samples 2-2 through 2-4 subjected to only the first heating treatment. Furthermore, the sharpness is raised; Samples 2-5 through 2-13 displays the sharpness of 73 to 86% compared with Samples 2-2 through 2-4 subjected to only the first heating treatment display the sharpness of 70%. The luminance degradation caused by moisture is also improved; the degradation is within the range of not more than 11 after the luminance degradation treatment.

It is understood that these effects can be obtained when the fluorine-containing solvent is employed as the organic solvent since the emitting light luminance and the sharpness are increased and the degradation caused by moisture is decreased in the order of Sample 2-10, 2-9, 2-8 and 2-6. Among them, Sample 2-6 employing HFE gives considerably excellent effects. Sample 2-6 is excellent in the emitting light luminance and the sharpness as the radiation image conversion panel and is prevented in the moisture degradation, which displays the luminance of 2.2, the sharpness of 86%, and the degradation caused by moisture is not observed at all after the degradation treatment.

It is understood that the gas atmosphere in the first heating treatment process does not influence on the effects of the second heating treatment process as shown in the results of Sample 2-5 through 2-7 as similar to those in Sample 2-2 trough 2-4.

It is observed in Samples 2-6, 2-11, 2-12 and 2-13 that the emitting light luminance and the sharpness are raised and the degradation in the luminance caused by moisture is surly lowered when the temperature for heating treatment is made higher.

As above-described, in the sample prepared by forming the stimulable phosphor layer on the substrate and subjecting to the first heating treatment in the atmosphere of air or inert gas and then further subjecting to the second heating treatment in the organic solvent gas is considerably excellent in the luminance and the sharpness and prevented in the degradation in the luminance compared with the sample subjected only the first heating treatment.

**Claims**

1.  A method for manufacturing a radiation image conversion panel comprising the steps of:

    forming a stimulable phosphor layer on a substrate by a vapor deposition method to prepare a phosphor plate;
    heating the phosphor plate in an organic solvent gas; and
    sealing the phosphor plate with a moisture-proof protective film to prepare the radiation image conversion panel.

2.  The method of claim 1 further comprising the step of:

    heating the phosphor plate in air or in an inert gas before heating the phosphor plate in the organic solvent gas.

3.  The method of claim 1 or claim 2 further comprising the step of:

    replacing the organic solvent gas with air or an inert gas after heating the phosphor plate in the organic solvent gas.

4.  The method of any one of claims 1 to 3, wherein the organic solvent is a halogen-containing solvent.

5.  The method of claim 4, wherein the halogen-containing solvent is a fluorine-containing solvent.

6.  The method of claim 5, wherein the fluorine-containing solvent is a hydrofluoroether (HFE).

7.  The method of any one of claims 1 to 6, wherein the organic solvent is a nonflammable solvent having no firing point.

8.  The method of any one of claims 1,2 and 4-7 further comprising the step of adjusting an organic solvent pressure to an atmospheric pressure after heating the phosphor plate in the organic solvent gas.

9.  A radiation image conversion panel manufactured by a method comprising the steps of:

    forming a stimulable phosphor layer on a substrate by a vapor deposition method to prepare a phosphor plate;
    heating the phosphor plate in an organic solvent gas; and
    sealing the phosphor plate with a moisture-proof protective film to prepare the radiation image conversion panel.

10. The radiation image conversion panel manufactured by the method of claim 9, the method further comprising the step of heating the phosphor plate in air or in an inert gas before heating the phosphor plate in the organic solvent gas.

11. The radiation image conversion panel manufactured by the method of claim 9 or claim 10, the method further comprising the step of replacing the organic solvent gas with air or with an inert gas after heating the phosphor plate in the organic solvent gas.

12. The radiation image conversion panel manufactured by the method of any one of claims 9 to 11, wherein the organic solvent is a halogen-containing solvent.

13. The radiation image conversion panel manufactured by the method of claim 12, wherein the halogen-containing solvent is a fluorine-containing solvent.

14. The radiation image conversion panel manufactured by the method of claim 13, wherein the fluorine-containing solvent is a hydrofluoroether (HFE).

**15.** The radiation image conversion panel manufactured by the method of any one of claims claim 9 to 14, wherein the organic solvent is a nonflammable solvent having no firing point.

**16.** The radiation image conversion panel manufactured by the method of any one of claims 9, 10 and 12-15, the method further comprising the step of adjusting an organic solvent gas pressure to an atmospheric pressure after heating the phosphor plate in the organic solvent gas.

# FIG. 1

# FIG. 2 ( a )

SUBSTRATE HOLDER                                   SUBSTRATE HOLDER

2

3

# FIG. 2 ( b )

AIR OR INERT GAS ATMOSPHERE

7

4

3

2

# FIG. 2 ( c )

9

ORGANIC SOLVENT GAS ATMOSPHERE

8

4

3

2

# FIG. 2 ( d )

10

1

3 }
4
2 }

20

# FIG. 3

SUBSTRATE HOLDER

SUBSTRATE HOLDER.

$\theta_1 = 30°$

$\theta_2 = 60°$